# DEMANDE DE BREVET EUROPEEN

(11) **EP 2 182 435 A1**
(43) Date de publication de la demande: **05.05.2010**
(21) Numéro de dépôt: 09168278.1
(22) Date de dépôt: 20.08.2009
(51) Int. Cl.: G06F 9/445

(54) **Procédé d'implémentation d'une machine à états finis via l'utilisation d'annotations Java**

(30) Priorité: 31.10.2008 FR 0857437
(71) Demandeur: Alcatel Lucent, 75008 Paris (FR)
(72) Inventeur: Lebel, Christophe, 44708, Orvault (FR); Froment, Thomas, 91310 Longpont sur Orge (FR)
(74) Mandataire: Chaffraix, Sylvain

(57) **Abrégé**

La présente invention concerne un procédé d'implémentation d'une machine à états finis modélisant une application informatique en spécifiant une pluralité d'états et une pluralité de transitions définissant les passages entre ces dits états. Selon l'invention le procédé comporte une étape d'encodage de la machine à états finis (E20a ; E20b ; E20c) comprenant les étapes de :
- création d'un objet Java de type POJO, qui une fois instancié, peut prendre successivement les différents états spécifiés par ladite machine à état finis, ledit objet Java comportant au moins une méthode susceptible d'être exécutée lors d'une transition dudit objet Java depuis un premier état vers un second état ;
- création et association à ladite au moins une méthode d'au moins une annotation Java permettant de spécifier une transition lors de laquelle la méthode doit être exécutée, ladite annotation comprenant pour attributs au moins un événement déclencheur de ladite transition, un état de départ et un état d'arrivée correspondant respectivement à l'état dudit objet avant et après ladite transition.

## Description

La présente invention concerne le domaine de la programmation et de l'implémentation d'applications informatiques, et plus particulièrement un procédé d'implémentation d'une machine à états finis.

Aujourd'hui, de nombreuses applications informatiques sont conçues et implémentées grâce à une modélisation et une implémentation sous la forme de machines à états finis ou FSM (initiales anglo-saxonnes pour Finite State Machine).

La machine à états finis est le résultat d'une analyse du problème que l'application informatique est supposée résoudre, basée sur une modélisation orientée objet. Nous entendons par modélisation orientée objet un type particulier de modélisation dans laquelle les éléments de modélisation sont des classes ou des objets possédant, entre autre, des attributs et des méthodes par opposition à une modélisation fonctionnelle dans laquelle les éléments de modélisation sont des fonctions de traitement et des flux des données.

Le travail des développeurs des applications consiste alors à créer, à partir de la modélisation orientée objet de l'application, un FSM code qui correspond au code source complet de la machine à états finis. Le FSM code est un texte écrit dans un langage de programmation ou de description qui est ensuite compilé en langage machine afin d'être exécuté par une plate-forme informatique matérielle, ou interprété par un environnement logiciel ou matériel d'interprétation.

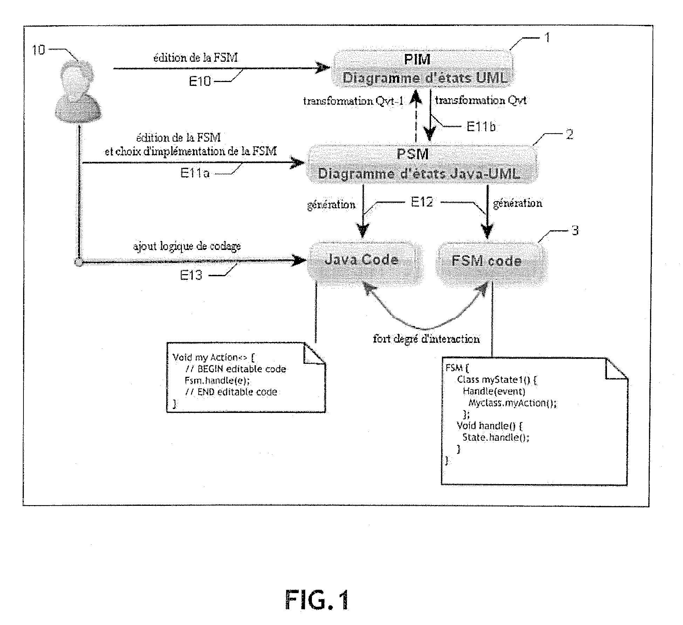

Afin de générer le FSM code, les développeurs peuvent utiliser l'approche MDA (initiales anglo-saxonnes pour Model Driven Architecture). La figure 1 décrit schématiquement les différentes étapes mises en oeuvre au cours de cette approche depuis la modélisation jusqu'à la génération du FSM code.

Conformément à ce qui est montré sur la figure 1, la première étape de cette approche consiste à modéliser (étape E10 sur la figure 1) l'application par l'intermédiaire d'un modèle PIM (initiales anglo-saxonnes pour Physical Implementation Model) indépendant de toute plateforme ou environnement informatique sur lequel ou à partir duquel la FSM (l'application implémentée grâce à la FSM) s'exécutera.

Le modèle PIM 1 correspond à un très haut degré d'abstraction de l'application et est classiquement créé à partir du langage UML (initiales anglo-saxonnes pour Unified Modeling Language). Pour rappel, l'UML peut être traduit par « langage de modélisation justifié » et désigne une notation (plutôt qu'un langage) de modélisation par objets. Une telle notation permet de déterminer et de représenter les composants d'une application lors de son développement.

A ce stade, l'application est modélisée par une représentation graphique à l'aide de diagrammes UML tels que les diagrammes de classes, d'interactions ou d'états-transitions ne faisant intervenir aucune notion propre à un langage de programmation particulier.

La deuxième étape du modèle MDA, consiste à choisir la plateforme et l'environnement sur lesquels le développeur 10 désire implémenter l'application (étape E11a sur la figure 1). Une fois ce choix effectué, il est possible de transformer (étape E11b sur la figure 1) le modèle PIM 1 en un modèle PSM 2 (abréviation anglo-saxonnes pour Platform Specific Model) pour envisager une implémentation concrète de l'application sur une plateforme ou un environnement particulier.

Cette transformation de modèle est classiquement réalisée par l'intermédiaire d'outils automatisés propriétaires (par exemple Rational Rose^{®} de IBM ou Rhapsody^{®} de i-Logix) en respectant plus ou moins le standard nommé QVT (initiales anglo-saxonnes pour Query View Transformation) défini par l'OMG (initiales anglo-saxonnes pour Object Management Group).

Dans l'exemple illustré par la figure 1, l'environnement choisi pour implémenter l'application étant un environnement Java, la transformation du modèle PIM 1 en modèle PSM 2 consiste notamment en la transformation des diagrammes UML du modèle PIM 1 en diagrammes orientés Java. Cette transformation peut, en quelque sorte, être perçue comme l'instanciation en langage Java du modèle PIM 1 potentiellement enrichie de stéréotypes liés à la plateforme sur laquelle le développeur 10 désire implémenter l'application. Plus précisément, cela consiste à apporter au modèle PIM 1 les propriétés qui seront nécessaires à la génération du FSM code 3. Durant la transformation, les classes UML sont traduites en classes Java et peuvent être complétées par des appels à des bibliothèques particulières relatives à la plateforme ou l'environnement.

Grâce à la représentation sous forme de diagrammes, les développeurs 10 peuvent aisément interpréter la FSM qui résulte de la modélisation de l'application. En effet, de telles représentations permettent de déterminer l'ensemble des états et des transitions des différents objets composant la FSM par une simple lecture des diagrammes. Ainsi, les développeurs 10 peuvent rapidement vérifier la cohérence de leur modélisation et éventuellement effectuer des corrections tant au niveau du modèle PIM 1 qu'au niveau du modèle PSM 2.

Une modification effectuée au niveau du modèle PIM peut être répercutée dans le modèle PSM 2 en effectuant une nouvelle transformation QVT du modèle PIM 1 modifié. De façon similaire, une modification effectuée au niveau du PSM 2 peut être remontée au niveau du modèle PIM 1 grâce à l'utilisation de transformations QVT inverses (notées QVT¹) généralement permises par les outils précédemment évoqués.

Comme le montre la figure 1, une troisième étape de l'approche MDA consiste à générer (étape E12 sur la figure 1), au moyen des outils précédemment évoqué, un code source 3 à partir du modèle PSM 2. Ce code source 3 correspond au codage de la machine à états finis dans un langage de programmation donné. De façon usuelle, les différents outils génèrent seulement une partie du code éditable et modifiable par le développeur 10.

Cependant, la structure du code source 3 ainsi généré est totalement dépendante de l'outil de génération de code utilisé, en particulier des librairies d'implémentations utilisées par l'outil de génération. Par exemple, en fonction de l'outil, le code source 3 peut à la fois contenir l'algorithme et les structures pour les états et leur passage ainsi que les méthodes à coder pour la logique résultante. Les codes obtenus sont alors généralement longs et potentiellement complexes. Bien que, lors de leur génération, ces codes soient ponctués de balises indiquant aux développeurs 10 les endroits où ces derniers peuvent faire des développements complémentaires (modifications de code ou ajout d'informations sous forme de code), il est généralement très difficile, voir impossible pour un développeur 10 de retrouver la FSM telle que définie à l'aide des modèles 1, 2 précédents.

Cette lisibilité réduite rend alors les modifications peu aisées et augmente significativement le risque de fausses manipulations de la part des développeurs 10, ce qui peut entraîner des pertes de code applicatif. De plus, les balises propriétaires introduites lors de la génération du code empêchent classiquement toute transformation inverse (transformation code source 3 vers modèle PSM 2) par un outil autre que celui qui a réalisé la génération du code source 3 à partir du modèle PSM 2. Cette forte dépendance ne permet pas aux développeurs 10 d'effectuer des retours vers le modèle PSM 2 pourtant nécessaires à la compréhension de la FSM.

La présente invention vise à faciliter l'implémentation d'applications informatiques au moyen d'une FSM en augmentant, d'une part, la lisibilité du code source représentant le code FSM obtenu lors de l'encodage de la FSM et, d'autre part, en diminuant la dépendance avec les librairies d'implémentations nécessaires à la FSM.

Dans ce but, l'objet de l'invention concerne un procédé d'implémentation d'une machine à états finis modélisant une application informatique en spécifiant une pluralité d'états et une pluralité de transitions définissant les passages entre ces dits états, ledit procédé comportant une étape d'encodage de ladite machine à états finis en langage de programmation Java, le code source obtenu par ladite étape d'encodage représentant le code complet de ladite machine à états finis, caractérisé en ce que ladite étape d'encodage comporte les étapes de :
- création d'un objet Java de type POJO, qui une fois instancié, peut prendre successivement les différents états spécifiés par ladite machine à état finis, ledit objet Java comportant au moins une méthode susceptible d'être exécutée lors d'une transition dudit objet Java depuis un premier état vers un second état ;
- création et association à ladite au moins une méthode d'au moins une annotation java permettant de spécifier une transition lors de laquelle la méthode doit être exécutée, ladite annotation comprenant pour attributs au moins un événement déclencheur de ladite transition, un état de départ et un état d'arrivée correspondant respectivement à l'état dudit objet avant et après ladite transition.

Les annotations utilisées forment une abstraction de la machine à états finis. Cette abstraction permet, entre autre à un développeur 10 ou un compilateur Java, de retrouver l'algorithmique de la machine à états à partir du FSM code généré.

En conséquence, le procédé permet de s'abstraire de l'obligation de génération de codes liées aux librairies FSM utilisées puisque les annotations JAVA peuvent être exploitées au chargement du système (ou lors de son initialisation) sur une plateforme cible.

Conformément à l'invention le procédé d'implémentation peut comporter en outre une étape d'instanciation de l'objet Java sur un environnement d'exécution Java au cours de laquelle la machine à états finis est couplée à l'objet suite à une analyse de ladite au moins une annotation par l'environnement d'exécution.

Le choix d'implémentation de la FSM est alors effectué lors du chargement d'une classe par l'environnement d'exécution lui-même sans nécessiter la connaissance de la part du développeur de toutes les librairies et service nécessaires à la bonne exécution des méthodes de l'objet.

Une fois l'étape d'instanciation réalisée, le procédé peut comprendre de plus une étape de détection de la réalisation d'un évènement via l'utilisation d'un qualificateur d'évènements. L'événement peut être compris par la FSM finis ou extérieur à la FSM.

L'utilisation d'un tel qualificateur d'événement permet à la FSM de recevoir le contexte précis de l'évènement extérieur original. L'algorithme sous-jacent de la FSM peut alors être ou ne pas être dépendent de la sémantique convoyée par cet évènement

D'autres caractéristiques et avantages de l'invention apparaîtront à la lecture de la description qui va suivre en références aux dessins annexés dans lesquels :
- La figure 1, précédemment décrite, représente les différentes étapes mises en oeuvre par un développeur pour la génération d'un FSM code en suivant l'approche MDA de l'état de la technique.
- La figure 2a représente une FSM sous la forme d'un diagramme d'états, la FSM étant le résultat d'une modélisation orientée objet d'une application.
- La figure 2b représente, de façon simplifiée, le code source obtenu suite à l'encodage de la FSM telle que représentée sur la figure 2a conformément à l'invention.
- La figure 3 représente les différentes étapes mises en oeuvre par un développeur pour l'implémentation d'une FSM conformément à l'invention.
- La figure 4 représente, sous la forme d'un organigramme, différentes étapes relatives au couplage de la FSM avec un objet Java et à la récupération d'évènements susceptibles de déclencher une transition de l'état de l'objet Java conformément à l'invention.

Comme précédemment mentionné, pour pouvoir implémenter et exécuter une application au moyen de l'implémentation d'une FSM, le développeur 10 de l'application commence classiquement par modéliser son l'application en utilisant une modélisation orientée objet. Cette étape consiste définir une classe (un objet) dont les différents attributs, méthodes (fonctions) et états seront modifiés ou s'exécuteront aux différents stades d'exécution de l'application.

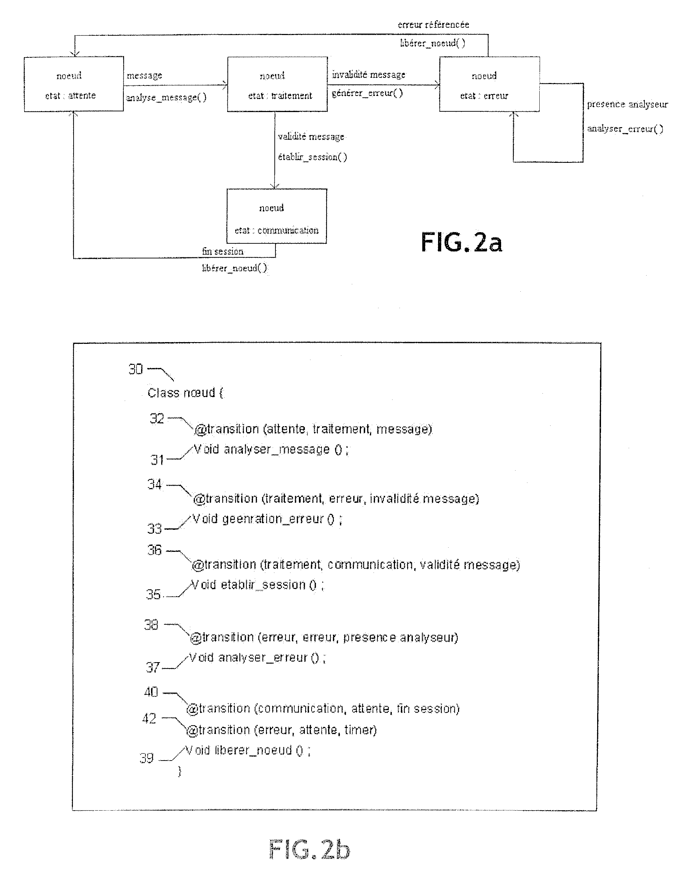

L'exemple non limitatif suivant, en références aux figures 2a et 2b, a pour but d'illustrer la création d'un objet Java et l'association d'annotations Java aux différentes méthodes de l'objet conformément à l'invention.

La figure 2a décrit un exemple de diagramme d'états obtenu suite à une modélisation orientée objet d'une application de gestion d'appel au niveau d'un noeud appelé. Un tel noeud peut notamment consister en un proxy utilisé pour l'établissement d'une session SIP (initiales anglo-saxonnes pour Session Initiation Protocol) entre un appelé et un appelant. Comme le montre la figure 2a, une telle application peut être modélisée en définissant l'objet « noeud » pouvant prendre plusieurs états. Conformément à ce qui est représenté sur la figure 2a, l'objet « noeud » peut prendre les états :
- attente : cet état correspond à l'état initial d'un noeud;
- traitement : un message d'invitation a été reçu par le noeud et le traitement d'une ouverture de session est en cours ;
- communication : une session est en cours, une communication est établie entre le noeud et un appelant ;
- erreur : le message d'invitation est invalide, une erreur doit être traitée ;

La représentation sous forme de diagramme d'états permet également de spécifier des transitions (modélisées par des flèches) d'un état vers un autre (éventuellement d'un état vers le même état), des conditions de transition, ainsi que des actions qui pourront être réalisées par des méthodes de l'objet lorsque celui-ci se trouve dans un certain état ou lorsqu'une transition d'un premier état vers un second état se produit. Par exemple :
- la fonction « analyser le message » sera exécutée lorsque l'objet noeud passera de l'état attente à l'état traitement ;
- la fonction « établir session » sera exécutée lorsque l'objet spectacle passera de l'état traitement à l'état communication ;
- la fonction « analyser erreur » peut être exécutée lorsque l'objet se trouve dans l'état erreur ;

L'ensemble des états, transitions et actions définissent la FSM. La représentation courante sous forme de diagramme d'états permet de déterminer rapidement et facilement l'ensemble des états que peut prendre l'objet, les différentes transitions ainsi que les actions à exécuter lors des transitions.

Cependant, comme précédemment mentionné, le code source généré par des outils de génération automatique de code classiques ne conserve pas une telle lisibilité de la FSM en ce sens qu'il peut être difficile, à partir de la lecture du code source généré, de différencier les états, les transitions et les actions associés à l'objet.

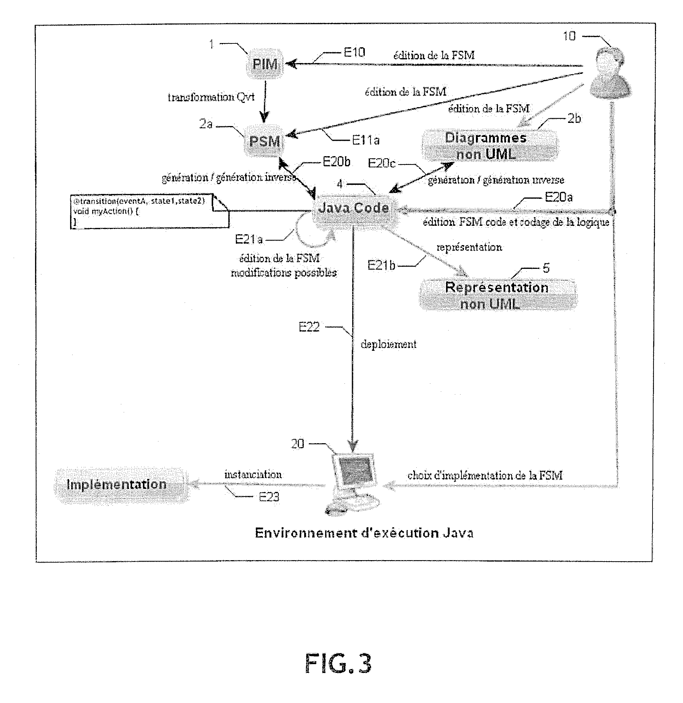

Conformément au procédé de l'invention, lors de l'encodage de la FSM (étapes E20a, E20b, E20c sur la figure 3), un objet Java de type POJO (initiales anglo-saxonnes pour Plain Old Java Object) est créé.

L'acronyme POJO, inventé par Martin Fowler, Rebecca Parsons et Josh MacKenzie en septembre 2000, fait référence à un objet JAVA simple en ce sens qu'il est indépendant de tout autre composant telle que, par exemple, une interface complexe de framework (environnement de développement). Le but de l'utilisation des POJO est de simplifier la création d'objets d'une application Java. En effet, la simplicité d'un objet POJO permet au développeur de s'affranchir de la conception et de la complexité de développement imposées par les interfaces des différents frameworks.

Une fois instancié, l'objet de type POJO créé lors de l'encodage, pourra prendre successivement les différents états définis par la FSM. Les méthodes définies dans l'objet Java créé pourront être exécutées lors d'une transition de l'objet depuis un premier état vers un second état.

De plus, afin de conserver une lisibilité suffisante pour permettre de retrouver l'algorithmique de la FSM, les métadonnées de types annotations telles que disponibles depuis l'édition du JDK 5 (initiales anglo-saxonnes pour Java Development Kit) sont utilisées pour définir les transitions au cours desquelles les méthodes seront exécutées.

Plus précisément, à chaque méthode de l'objet concrétisant une action de la FSM est associée au moins une annotation Java. Cette annotation est utilisée pour spécifier la transition lors de laquelle la méthode devra être exécutée. L'annotation comporte pour attributs au moins un événement déclencheur de la transition, un état de départ et un état d'arrivée qui correspondent respectivement à l'état de l'objet pris avant et après la transition.

La figure 2b représente, de façon simplifiée, le code source (4 sur la figure 3) correspondant au code complet de la FSM modélisant l'application de gestion d'appel au niveau d'un noeud appelé telle que représentée sous la forme de diagrammes d'états à la figure 2a. A proprement parlé le code source représente le code complet du point de vu extérieur. Sur le plan de l'exécution, il est du ressort de la librairie FSM d'adapter ou non le code réellement exécuté, possible ment avec des techniques de génération de byte-code (ajout de binaire dans le code initial). Un objet 30 de type POJO nommé noeud a été créé. Cet objet comporte plusieurs méthodes 31, 33, 35, 37, 39 dont :
- void analyser_message () ;
- void generer_erreur ()
- void analyser_erreur ()
- void liberer_noeud ()

Conformément à l'invention, lors de l'encodage de la FSM, au moins une annotation 32, 34, 36, 38, 40, 42 a été créée et associée à chaque méthode. Entre autre,
- l'annotation 32 @transition(attente, traitement, message) a été associée à la méthode 31 analyser_message(), ce qui signifie que la méthode 31 analyser_message() sera à exécuter lorsque l'objet noeud sera dans l'état attente et qu'il sera détecté qu'un message est arrivé. Une telle annotation 32 définit une transition de l'objet noeud de l'état de départ attente vers l'état d'arrivée traitement. L'action consistant à l'exécution de la méthode 31 analyser_message() est associée à la transition ;
- les annotations 40, 42 @transition(erreur, attente, timer) et @transition(communication, attente, fin session) ont été associées à la méthode 39 liberer_noeud(), ce qui signifie cette méthode 39 se réalisera soit lorsque l'objet « noeud » 30 sera dans l'état erreur et qu'un temps écoulé prédéfini se sera écoulé, soit lorsque l'objet « noeud » 30 sera dans l'état communication et que l'évènement fin de session sera détectée. Dans le premier cas, l'objet « noeud » 30 passera de l'état erreur à l'état attente et dans le second cas, de l'état communication à l'état attente. Plusieurs annotations peuvent donc être associées à une méthode.

Une annotation peut également avoir plus de trois attributs. Par exemple, il est possible de définir plusieurs événements déclencheurs dont l'un au moins doit être détecté pour que la transition se réalise. Alternativement, la combinaison de l'ensemble des évènements déclencheurs spécifié dans l'annotation peut être nécessaire pour que la transition se réalise. Les attributs supplémentaires peuvent également être relatifs à une condition ou un état composé.

Les annotations utilisées forment une abstraction de la machine à états finis. Cette abstraction permet, entre autre à un développeur 10, de retrouver l'algorithmique de la machine à états à partir du FSM code généré conformément à l'invention.

Comme le montre la figure 3, le code 4 peut être édité directement par un développeur sans aucune étape préalable de modélisation de la FSM à l'aide de diagrammes (étape E20a sur la figure 3). En générant un tel code 4, le développeur 10 a la capacité d'éditer et de faire des modifications (étape E21a sur la figure 3) sur la logique métier (codée sous la forme d'instructions de code relatives à l'objet, ses attributs et ses méthodes) et sur la logique de la FSM (codée sous la forme d'annotations relatives aux transitions d'états possible pour l'objet) via le même éditeur de code tout en n'ayant aucun risque d'introduire de la confusion puisque la définition de la FSM se trouve dans les annotations et non dans les instructions de codes à proprement parlé.

Avantageusement, l'invention peut également être intégrée dans une approche MDA, L'encodage de la FSM peut être alors effectué à partir d'un modèle PSM créé au cours d'une telle approche (étape E20b sur la figure 3). En procédant de la sorte, le développeur peut continuer à utiliser des modèles PIM 1 et PSM 2 à haut degrés d'abstraction par lesquels il est relativement aisé de modéliser une application au moyen d'une FSM sans risquer de perdre la lisibilité de la FSM lors de la génération du code source 4. En effet, en générant le code 4 conformément à l'invention, une référence explicite des transitions, des états, et des évènements déclencheurs tels que définis dans les modèles PIM 1 et PSM 2, sera conservée.

Comme le montre également la figure 3, l'encodage selon l'invention peut également être réalisée à partir d'outils de modélisation d'applications non orientés UML, ce que peu d'outils, adhérant à l'approche MDA permettent (étape E20c sur la figure 3).

D'autre part, la lisibilité introduite dans le code 4 (obtenu grâce l'encodage de la FSM selon l'invention) par la séparation de la partie du code relative à la logique métier et la partie du code relative à la logique de la FSM peut être exploitée non seulement pas les développeurs 10 pour effectuer des modifications dans le code 4 sans risquer de perte de code applicatif mais également par les outils de transformation automatiques précédemment évoquées pour réaliser simplement des transformations inverses (transformations d'un FSM code en représentation graphique de la FSM, transformations dites « texte » vers « modèle »).

En effet, les annotations et les objets Java de type POJO étant des concepts Java largement utilisés et élémentaires, une telle représentation du code généré peut apparaître comme une forme standardisée facilement interprétable par n'importe quel outil de transformation contrairement à l'utilisation des balises précédemment évoquées qui sont propriétaires et peuvent être interprétées uniquement par l'outil les ayant générées.

Comme montré sur la figure 3, la représentation graphique obtenue par la transformation inverse peut correspondre à un PSM 2 ou au contraire à une représentation ne faisant pas intervenir l'UML 5.

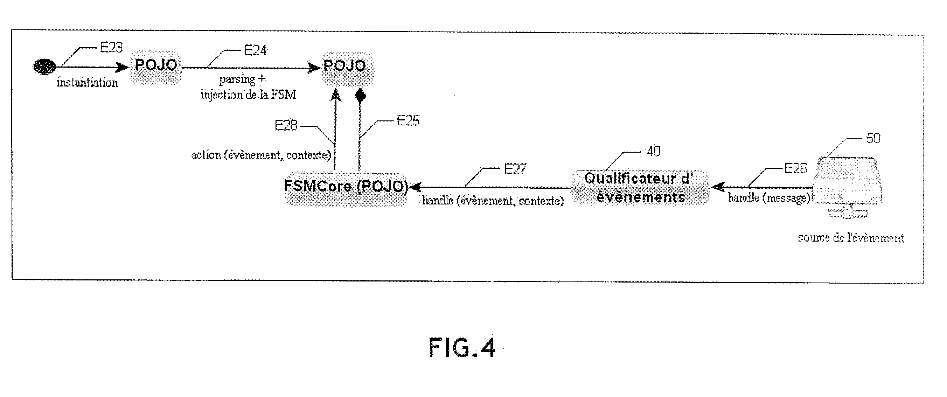

En référence aux figures 3 et 4, les différentes étapes mises en oeuvre pour l'implémentation de la FSM une fois le FSM code 4 généré, vont être détaillées.

Une fois le FSM, code 4 généré, l'application modélisée par la FSM peut être déployée (installée) sur la plateforme sur laquelle le développeur désire qu'elle soit exécutée (étape E22 sur la figure 3). Lors de ce déploiement, l'objet de type POJO est instancié (étape E23 sur la figure 3) sur un environnement d'exécution 20 (Java runtime). Au cours de cette instanciation, la FSM est couplée audit objet suite à l'analyse des annotations par l'environnement d'exécution.

Plus précisément, les annotations sont extensibles et peuvent donc être accessibles lors de l'exécution du FSM code 4. En conséquence, lors de l'instanciation de l'objet 30, l'environnement d'exécution Java effectuée une analyse syntaxique, couramment appelée parsing, de l'ensemble des annotations 32, 34, 36, 33, 40, 42 associées à l'objet 30 (étape E24 sur la figure 4). Suite à cette analyse, l'environnement d'exécution charge les librairies nécessaires à l'exécution de la FSM et notifie les sous-systèmes qui servent à compléter l'instanciation de l'objet 30 en couplant des services aux méthodes 31, 33, 35, 37, 39 associées aux annotations 32, 34, 36, 38, 40, 42 (étape E24 sur la figure 4). Ces services permettent, entre autre, de déterminer le mode de comportement des méthodes 31, 33, 35, 37, 39 et de déterminer les conditions d'exécutions de ces méthodes 31, 33, 35, 37, 39.

De façon alternative, le couplage de la FSM à l'objet peut également être effectué suite à l'analyse d'au moins une seconde annotation héritée de ladite au moins une annotation, ladite seconde annotation comportant au moins un attribut en plus de l'annotation dont elle hérite. En effet, les annotations JAVA pouvant être étendues comme les classes Java, il est possible en utilisant le principe d'héritage (principe de la programmation orientée objet, permettant, entre autre, la réutilisabilité et l'adaptabilité des objets) d'effectuer le couplage à partir d'une annotation plus complexe héritée et permettre ainsi au procédé d'être appliqué à d'autres types de FSM dont la sémantique peut nécessiter des paramètres plus complexes.

Une fois l'objet 30 instancié, la FSM est à proprement parlé couplée à l'objet 30 de type POJO qui la porte (étape E25 sur la figure 4).

Par la suite, la réalisation d'un événement est détectée (étape E26 sur la figure 4) via l'utilisation d'un qualificateur d'événements 40, l'évènement peut être compris par la FSM ou extérieur à la FSM. Le qualificateur d'événement est un élément logiciel ou une fonctionnalité dont le rôle est de détecter des événements attendus par la FSM sur la plateforme 50 sur laquelle est implémentée l'application. Lorsque le qualificateur 40 détecte un évènement, il le transmet (étape E27 sur la figure 4) sous une forme adéquate à la FSM pour que les transitions se réalisent et les méthodes de l'objet associées aux transitions s'exécutent (étape E28 sur la figure 4).

L'évènement peut être compris par la FSM, typiquement il peut s'agir du résultat de l'exécution d'une méthode. Un tel événement peut être directement interprétable par la FSM et peut être comparé aux différents éléments déclencheurs définis dans les différentes annotations. Cependant, l'événement peut également être extérieur à la machine. Il peut notamment s'agir d'un message reçu en provenance d'une tierce application transmis par le réseau, une donnée de la plateforme telle qu'un registre d'horloge ou timer de la plateforme 40. Dans ce cas, le qualificateur d'évènement 40 est adapté à traduire l'évènement extérieur en un évènement interprétable par la FSM.

L'utilisation d'un tel qualificateur d'évènement 40 permet d'éviter d'isoler la FSM totalement des éléments extérieurs, ce qui serait très limitatif, ou de générer un code source complexe listant l'ensemble des événements extérieurs possibles pour le déclenchement d'une transition. En effet, à un évènement déclencheur donné d'une transition peuvent correspondre plusieurs événements extérieurs représentés de manières différentes. Multiplier les annotations pour lister l'ensemble des évènements extérieurs risquerait de nuire à la lisibilité de la FSM à partir du FSM code 4.

Lorsqu'un événements est détecté, il est communiqué à la FSM et l'état dans lequel se trouve l'objet est déterminé. Dans le cas où l'évènement détecté et l'état déterminé de l'objet coïncident respectivement avec l'événement de déclenchement et l'état de départ spécifiés dans une annotations, l'objet passe de l'état de départ ainsi déterminé vers l'état d'arrivée spécifié par l'annotation et la méthode associée à l'annotation est exécutée.

D'autre part, certaines méthodes peuvent avoir besoin de données associées à l'évènement de déclenchement pour être exécutées. Ces données définissent classiquement un contexte d'exécution. Le qualificateur d'événement 40 est alors adapter à analyser la signature de la méthode qui doit être exécutée suite à la détection de l'évènement. En fonction de la signature analysée, le qualificateur d'évènement 40 est adapté à transmettre à la FSM le contexte nécessaire à la bonne exécution de la méthode.

## Revendications

1. Procédé d'implémentation d'une machine à états finis modélisant une application informatique en spécifiant une pluralité d'états et une pluralité de transitions définissant les passages entre ces dits états, ledit procédé comportant une étape d'encodage de la machine à états finis (E20a ; E20b ; E20c) en langage de programmation Java, le code source obtenu par ladite étape d'encodage représentant le code complet de ladite machine à états finis, **caractérisé en ce que** ladite étape d'encodage (E20a ; E20b ; E20c) comporte les étapes de :
- création d'un objet Java (30) de type POJO, qui une fois instancié, peut prendre successivement les différents états spécifiés par ladite machine à état finis, ledit objet Java comportant au moins une méthode (31 ; 33 ; 35 ; 37 ; 39) susceptible d'être exécutée lors d'une transition dudit objet Java depuis un premier état vers un second état ;
- création et association à ladite au moins une méthode (31 ; 33 ; 35 ; 37 ; 39) d'au moins une annotation Java (32 ; 34 36 ; 38 ; 40 ; 42) permettant de spécifier une transition lors de laquelle la méthode (31 ; 33 ; 35 ; 37 ; 39) doit être exécutée, ladite annotation (32 ; 34 ; 36 ; 38 ; 40 ; 42) comprenant pour attributs au moins un événement déclencher de ladite transition, un état de départ et un état d'arrivée correspondant respectivement à l'état dudit objet (30) avant et après ladite transition.

2. Procédé d'implémentation d'une machine à états finis selon la revendication 1, **caractérisé en ce qu'**il comporte en outre une étape d'instanciation (E23) dudit objet Java sur un environnement d'exécution Java au cours de laquelle la machine à états finis est couplée (E25) audit objet suite à une analyse (E24) de ladite au moins une annotation (32 ; 34 ; 36 ; 38 ; 40 ; 42) par ledit environnement d'exécution 20.

3. Procédé d`implémentation d'une machine à états finis selon la revendication 1, **caractérisé en ce que** la machine à états fini est couplée audit objet suite à l'analyse (E24) d'une annotation héritée de ladite au moins une annotation, ladite annotation héritée comportant au moins un attribut en plus de ladite annotation dont elle hérite.

4. Procédé d'implémentation d'une machine à états finis selon l'une quelconque des revendications 2 ou 3, **caractérisé en ce qu'**une fois ladite étape d'instanciation (E23) réalisée, ledit procédé comprend de plus une étape de détection (E26) de la réalisation d'un événement via l'utilisation d'un qualificateur d'événements (40), ledit évènement pouvant être compris par ladite machine à état finis ou extérieur à ladite machine à état finis.

5. Procédé d'implémentation d'une machine à états finis selon la revendication 4, **caractérisé en ce que** ledit événement étant extérieur à ladite machine à état finis, le procédé comprend de plus une étape de traduction (E27) dudit événement extérieur en un évènement interprétable par ladite machine à état finis.

6. Procédé d'implémentation d'une machine à états finis selon l'une quelconque des revendications 4 ou 5, **caractérisé en ce que** ledit procédé comporte de plus les étapes de :
- détermination de l'état dans lequel se trouve ledit objet Java ; et
- dans le cas où l'évènement détecté et l'état déterminé dudit objet coïncident respectivement avec l'événement de déclenchement et l'état départ spécifiés d'une annotation (32 ; 34 ; 36 ; 38 ; 40 ; 42), exécution (E28) de la méthode (31 ; 33 ; 35 ; 37 ; 39) associée à ladite annotation et transition- (E28) dudit objet Java 30 depuis l'état de départ déterminé vers l'état d'arrivée spécifié par la dite annotation.

7. Procédé d'implémentation d'une machine à états finis selon la revendication 6, **caractérisé en ce que** lors de l'exécution de la dite méthode (31 ; 33 ; 35 ; 37 ; 39), il comporte une étape d'analyse de la signature de ladite méthode (31 ; 33 ; 35 ; 37 ; 39), et en fonction de la signature analysée, une étape de transmission (E27) du contexte associé à l'évènement détecté à la dite méthode via le qualificateur d'évènements (40).

8. Procédé d'implémentation d'une machine à états finis selon l'une quelconque des revendications précédentes, **caractérisé en ce que** ladite étape d'encodage (E20b) est effectuée à partir d'un modèle PSM 2 créé par une approche de type MDA.
